(19) Europäisches Patentamt / European Patent Office / Office européen des brevets

(11) **EP 4 081 770 B1**

(12) **FASCICULE DE BREVET EUROPEEN**

(45) Date de publication et mention
de la délivrance du brevet:
**18.09.2024 Bulletin 2024/38**

(21) Numéro de dépôt: **20838569.0**

(22) Date de dépôt: **24.12.2020**

(51) Classification Internationale des Brevets (IPC):
**G01H 9/00** *(2006.01)* **G01D 5/353** *(2006.01)*

(52) Classification Coopérative des Brevets (CPC):
**G01H 9/006; G01D 5/35312**

(86) Numéro de dépôt international:
**PCT/EP2020/087869**

(87) Numéro de publication internationale:
**WO 2021/130367 (01.07.2021 Gazette 2021/26)**

(54) **DISPOSITIF OPTIQUE DE DÉTECTION D'UNE ONDE ACOUSTIQUE**

OPTISCHE VORRICHTUNG ZUR ERFASSUNG EINER SCHALLWELLE

OPTICAL DEVICE FOR DETECTING AN ACOUSTIC WAVE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.12.2019 FR 1915695**

(43) Date de publication de la demande:
**02.11.2022 Bulletin 2022/44**

(73) Titulaires:
• **Commissariat à l'Energie Atomique et aux Energies Alternatives**
**75015 Paris (FR)**
• **Université Grenoble Alpes**
**38400 Saint-Martin-d'Hères (FR)**
• **Centre National de la Recherche Scientifique**
**75016 Paris 16 (FR)**
• **Institut Polytechnique de Grenoble**
**38000 Grenoble (FR)**

(72) Inventeurs:
• **LAUWERS, Thomas**
**38054 Grenoble Cedex 09 (FR)**
• **BASROUR, Skandar**
**38054 Grenoble Cedex 09 (FR)**
• **COUTARD, Jean-Guillaume**
**38054 Grenoble Cedex 09 (FR)**
• **GLIERE, Alain**
**38054 Grenoble Cedex 09 (FR)**
• **LAFFONT, Guillaume**
**38054 Grenoble Cedex 09 (FR)**

(74) Mandataire: **INNOV-GROUP**
**310, avenue Berthelot**
**69372 Lyon Cedex 08 (FR)**

(56) Documents cités:
EP-A2- 2 856 098     EP-A2- 2 856 098
EP-B1- 2 856 098     US-A1- 2009 180 730
US-A1- 2015 100 253  US-A1- 2018 087 956

**Description**

**DOMAINE TECHNIQUE**

Le domaine technique de l'invention est la détection d'une onde acoustique en utilisant une cavité optique résonante.

**ART ANTERIEUR**

La détection d'une onde acoustique est usuellement assurée par des dispositifs basés sur des résonateurs électromécaniques, de type MEMS (Micro-Electro Mechanical Systems) ou NEMS (Nano-Electro Mechanical Systems). Ce type de transducteur peut être fabriqué selon des procédés de microfabrication collectifs. Il en résulte un coût de fabrication modéré, ce qui les rend particulièrement adaptés à une utilisation dans des composants de la vie quotidienne. Ces résonateurs sont basés sur une membrane vibrant sous l'effet d'une exposition à une onde acoustique, la détection de la vibration étant effectuée par une transduction électrique. La transduction peut être effectuée par le biais de matériaux piézoélectriques, ou par effet capacitif.

Cependant, dans certaines applications, il est avantageux de détecter une vibration d'une membrane par transduction optique. En effet, la transduction optique peut permettre une mesure à distance, sans contact. Cela est particulièrement adapté à certains environnements, soumis à des contraintes de nature thermique ou électromagnétique, dans lesquels une transduction électrique n'est pas envisageable. Par ailleurs, une transduction optique est adaptée à des environnements présentant un risque d'explosion.

Des dispositifs basés sur une transduction optique ont été décrits dans les publications :

- Gallego D. "High-sensitivity ultrasound interferometric single-mode polymer optical fiber sensors for biomédical applications", Opt Letter, Vol. 34, n°12, p. 1807, june 2009;
- Chen K. "Fiber-optic Fabry Perot interferometer based high sensitive cantilever microphone", Sens. Actuators Phys., vol. 279, p. 107-112, august 2018 ;
- WO2014/195372 ;i
- S. M. Leinders "A sensitive optical micro-machined ultrasound sensor (OMUS) based on a silicon photonic ring resonator on an acoustical membrane", Sci. Rep., vol. 5, N°1, nov. 2015.

EP 2 856 098 A2 divulgue un capteur de pression à fibre optique qui comprend un interféromètre à réseau de Bragg (FBG).

Les inventeurs ont conçu un dispositif basé sur particulièrement compact, simple à fabriquer, et présentant une sensibilité de détection élevée.

**EXPOSE DE L'INVENTION**

Un premier objet de l'invention est un dispositif de détection d'une onde acoustique selon la revendication 1.

Selon un mode de réalisation, chaque réflecteur est un miroir de Bragg, formé par une modulation périodique d'un indice de réfraction le long du guide d'onde.

De préférence, le circuit d'asservissement comporte une boucle d'asservissement, reliée à la source de lumière, et configurée pour asservir la longueur d'onde d'émission de l'onde lumineuse émise par la source de lumière sur la longueur d'onde de résonance de la cavité optique résonante. Le circuit d'asservissement peut notamment mettre en oeuvre un asservissement de type verrouillage en longueur d'onde.

De préférence, la source de lumière laser émet l'onde lumineuse dans une bande spectrale d'émission de largeur inférieure à 10 pm, voire à 1 pm. De façon plus générale, la bande spectrale d'émission est plus étroite qu'une largeur du pic de résonance de la cavité optique résonante.

Selon un mode de réalisation :

- le premier réflecteur est un premier miroir de Bragg ;
- le deuxième réflecteur est un deuxième miroir de Bragg ;
- le premier miroir de Bragg et le deuxième miroir de Bragg forment un même miroir de Bragg comportant un défaut, le premier miroir de Bragg et le deuxième miroir de Bragg correspondant aux parties du miroir de Bragg s'étendant respectivement de part et d'autre du défaut.

Il peut notamment être formé par une inscription par laser femtoseconde.

Selon un mode de réalisation, le guide d'onde est une fibre optique microstructurée déposée sur la membrane.

Un deuxième objet de l'invention est un procédé de détection d'une amplitude d'une onde acoustique à l'aide d'un dispositif selon le premier objet de invention selon la revendication 7.

Un troisième objet de l'invention est un procédé de réalisation d'un dispositif selon le premier objet de l'invention selon la revendication 8.

L'invention sera mieux comprise à la lecture de l'exposé des exemples de réalisation présentés, dans la suite de la description, en lien avec les figures listées ci-dessous.

**FIGURES**

Les figures 1A à 1C montrent un premier exemple de dispositif selon l'invention.
La figure 2A montre une fibre optique microstructurée, formant un miroir de Bragg.

La figure 2B représente une bande spectrale de réflexion de la fibre optique schématisée sur la figure 2A.

La figure 2C montre une fibre optique microstructurée, formant une cavité optique résonante basée sur deux miroirs de Bragg espacés l'un de l'autre.

La figure 2D représente une bande spectrale de réflexion de la fibre optique schématisée sur la figure 2C.

La figure 3A montre un guide d'onde, comportant une cavité optique résonante, non déformé.

La figure 3B montre un guide d'onde, comportant une cavité optique résonante, déformée.

La figure 3C montre un guide d'onde dont la déformation n'est pas homogène.

La figure 3D montre une évolution de la bande spectrale de réflexion d'un guide d'onde, tel que représenté sur la figure 3C, sous l'effet de déformations.

La figure 3E représente une amplitude de déformation radiale d'une membrane, le long d'un diamètre de cette dernière.

La figure 3F montre un positionnement optimal d'un guide d'onde, compte tenu de la déformation représentée sur la figure 3D.

La figure 4A schématise un circuit mettant en oeuvre un asservissement de la longueur d'onde de la source de lumière selon une méthode de verrouillage en longueur d'onde.

La figure 4B montre l'évolution d'une fonction d'erreur obtenue par la méthode de verrouillage en longueur d'onde.

La figure 5A illustre un décalage de la longueur d'onde de résonance d'une cavité optique résonante, sous l'effet d'une vibration de la membrane.

La figure 5B montre une modulation temporelle de la longueur d'onde de résonnance optique.

La figure 5C schématise une estimation de l'amplitude de vibration d'une membrane à partir de la modulation temporelle de la longueur d'onde de résonance.

La figure 6 représente une fonction de transfert d'une membrane, dans une bande fréquentielle de fonctionnement.

Les figures 7A à 7D montrent les principales étapes d'un procédé de fabrication permettant de former un guide d'onde microstructuré au contact d'une membrane.

Les figures 8A et 8B schématisent deux configurations possibles d'un dispositif selon l'invention.

## EXPOSE DE MODES DE REALISATION PARTICULIERS

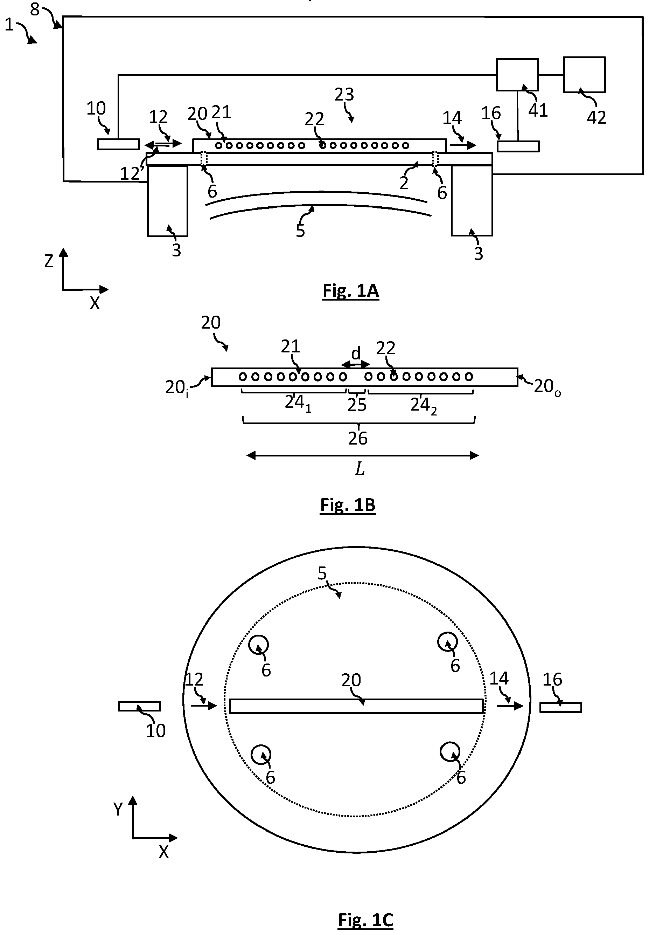

On a représenté, sur les figures 1A à 1C, un exemple d'un dispositif 1 selon l'invention. Le dispositif comporte une membrane souple 2, configurée pour vibrer lorsqu'elle est exposée à une onde acoustique incidente 5. La fréquence de l'onde acoustique incidente peut être comprise dans le domaine des ondes acoustiques sonores, ou des ondes acoustiques ultrasonores. La membrane 2 peut ainsi vibrer dans une bande de fréquence comprise entre 20Hz et 20 kHz (plage audible) et/ou s'étendant au-delà de 20 KHz, par exemple entre 20 KHz et quelques dizaines de MHz.

Dans l'exemple représenté, la membrane 2 s'étend selon un plan radial $P_{XY}$, perpendiculaire à un axe transversal Z.

La membrane 2 est reliée, par sa périphérie, à un substrat 3, formant un corps du dispositif. Le diamètre $\Phi$, ou la plus grande diagonale, de la membrane peut être compris entre 1 mm et 10 mm. L'épaisseur de la membrane, selon l'axe transversal, peut être comprise entre 10 $\mu$m et quelques mm, l'épaisseur dépendant du rayon r ou du diamètre $\Phi$ de la membrane. L'épaisseur peut être comprise entre quelques millièmes ($10^{-3}$) et le dixième ($10^{-1}$) du rayon. Elle peut être par exemple égale au centième du rayon.

La membrane 2 comporte de préférence des ouvertures traversantes 6, s'étendant parallèlement à l'axe transversal Z. De telles ouvertures permettent de maintenir un équilibre de la pression de part et d'autre de la membrane. Elles évitent une déformation de la membrane du fait d'une lente apparition d'une différence de pression de part et d'autre de la membrane. Par lente apparition, on entend une différence de pression se produisant à une fréquence inférieure à une plage de fonctionnement fréquentielle de la membrane. Le diamètre des ouvertures 6 est par exemple inférieur au dixième du diamètre de la membrane. Il est par exemple de l'ordre de 10 $\mu$m ou 20 $\mu$m.

Un guide d'onde 20 s'étend sur la membrane 2, au contact de cette dernière et parallèlement à cette dernière. Le guide d'onde s'étend entre une entrée $20_i$ et une sortie $20_o$. Le guide d'onde est élaboré à partir d'un premier matériau 21 d'un premier indice de réfraction $n_1$.

Le guide d'onde 20 peut être une fibre optique, auquel cas le premier matériau est le coeur de la fibre optique. Il peut également s'agir d'un guide d'onde formé à partir du dépôt d'une couche mince du premier matériau 21, par exemple SiON (oxynitrutre de Silicium), ce qui correspond à l'exemple représenté sur les figures 1A à 1C. Le guide d'onde est délimité par un matériau de confinement 23, dont l'indice de réfraction est inférieur à l'indice de réfraction $n_3$ du premier matériau $n_1$. Lorsque le guide d'onde 20 est une fibre optique, le matériau de confinement 23 est la gaine de la fibre optique.

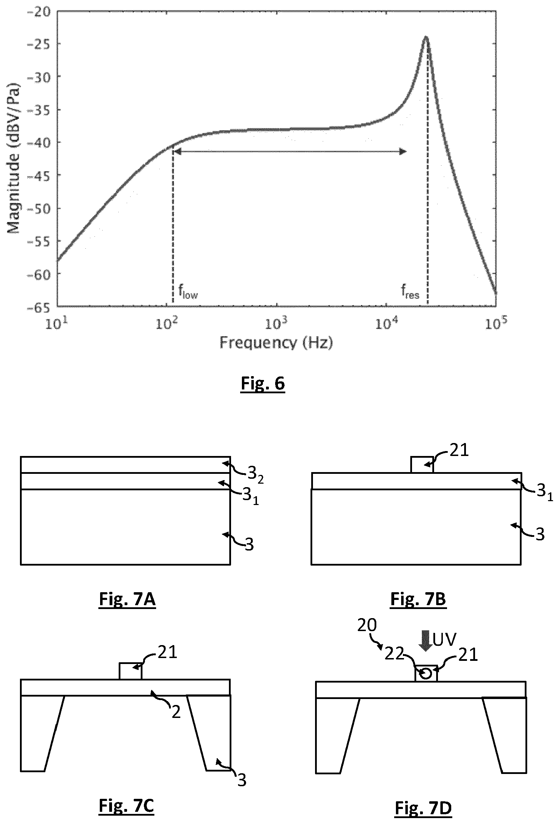

Le guide d'onde 20 est avantageusement formé à partir d'une couche mince du premier matériau 21. Le matériau de confinement 23 peut simplement être l'air entourant le premier matériau. L'épaisseur du guide d'onde, selon l'axe transversal Z, est de préférence inférieure à 10 $\mu$m ou à 5 $\mu$m. Le procédé de formation d'un tel guide d'onde est décrit en lien avec les figures 7A à 7D. Le fait de former un guide d'onde directement sur la membrane permet d'éviter une étape de collage de la fibre optique sur la membrane. Un autre avantage, par rapport à l'utilisation d'une fibre optique, est que cela permet d'obtenir un guide d'onde moins rigide.

Quelle que soit la configuration retenue, l'indice de réfraction $n_3$ du matériau de confinement 23 est inférieur à l'indice de réfraction $n_1$ du premier matériau 21. Lorsque le premier matériau 21 est directement déposé sur la membrane, l'indice de réfraction $n_1$ du premier matériau 21 est supérieur à l'indice optique du matériau formant la membrane 2.

Un exemple de guide d'onde 20 est détaillé sur la figure 1B. Dans cet exemple, le premier matériau 21 est déposé sur la membrane 2. Le guide d'onde comporte des portions d'un deuxième matériau 22, d'un deuxième indice de réfraction $n_2$, périodiquement réparties le long du guide d'onde 20. Le deuxième indice de réfraction $n_2$ est différent du premier indice de réfraction $n_1$. La variation relative entre le premier indice de réfraction et le deuxième indice de réfraction peut varier entre 0.01% ($10^{-4}$) à 0.1% ($10^{-3}$).

Le long de l'axe selon lequel s'étend le guide d'onde, l'indice de réfraction est périodiquement modulé, entre $n_1$ et $n_2$, de façon à former un miroir de Bragg dans une bande spectrale de réflexion $\Delta\lambda_{20}$. La structure d'un miroir de Bragg est connue de l'homme du métier. Il s'agit d'une structure selon laquelle l'indice de réfraction varie périodiquement, de telle sorte que le long de l'axe selon lequel se propage la lumière, le miroir est formé par une alternance périodique de portions de deux indices différents, l'épaisseur optique de chaque portion étant de $\lambda_B/4n_i$, où $\lambda_B$ est une longueur d'onde centrale de la bande de spectrale de réflexion $\Delta\lambda_{20}$ et $n_i$ est l'indice de réfraction du matériau considéré ($n_i = n_1$ ou $n_i = n_2$). Plus le contraste d'indice de réfraction est faible, plus le nombre de périodes est élevé.

La bande spectrale de réflexion $\Delta\lambda_{20}$ est centrée sur une longueur d'onde de résonance $\lambda_r$, également appelée longueur d'onde de Bragg $\lambda_B$, et telle que :

$$\lambda_r = \lambda_B = 2n_{eff}\Lambda \ (1)$$

où r

- $n_{eff}$ est un indice effectif du réseau, tel que

$$n_{eff} = \frac{n_1 + n_2}{2} \ \ (2)$$

- $\Lambda$ est la période spatiale du réseau, c'est-à-dire la longueur de deux portions 21 et 22 successives selon l'axe du guide d'onde.

Le guide d'onde 20 est tel que le miroir de Bragg, formé par l'alternance des portions 21 et 22, comporte un défaut. Par défaut, on entend une rupture localisée de la périodicité de la modulation d'indice de réfraction. Le défaut correspond par exemple à un espace continu 25, formé par un même matériau, par exemple le premier matériau 21, le long d'une période $\Lambda$ ou le long de plusieurs périodes successives. Cf. figure 1B. Au niveau du défaut, le guide d'onde comporte un même matériau, s'étendant selon une distance d le long de l'axe du guide d'onde 20. Lorsque la distance d est telle que

$$d = \frac{k\lambda_B}{n_{eff}}(1')$$

, où $k$ est un entier naturel positif, une cavité optique résonante 26 de type Fabry-Perot est formée, définissant une longueur d'onde de résonance $\lambda_r$. Lorsque le défaut 25 s'étend sur une seule période $\Lambda$, $\lambda_r$ = $\lambda_B$.

Lorsque d > $k\lambda_B/n_{eff}$, d'autres longueurs d'onde de résonnance $\lambda_r$ peuvent apparaître, dans la bande spectrale de réflexion $\Delta\lambda_{20}$, les longueurs d'onde de résonnance étant différentes de la longueur d'onde de Bragg $\lambda_B$. Dans un tel cas, on retient de préférence la longueur d'onde de résonance à laquelle le pic de résonance est le plus fin.

Ainsi, le défaut permet de séparer, dans le guide d'onde 20, un premier miroir de Bragg $24_1$ et un deuxième miroir de Bragg $24_2$. L'ensemble formé par le premier miroir de Bragg $24_1$, le deuxième miroir de Bragg $24_2$, et l'espace 25 entre les miroirs de Bragg forme la cavité résonante 26.

Le guide d'onde est alors structuré pour :

- réfléchir la lumière dans la bande spectrale de réflexion $\Delta\lambda_{20}$ des miroirs de Bragg $24_1$, $24_2$, en dehors de la longueur d'onde de résonance $\lambda_r$ ;
- transmettre la lumière dans la longueur d'onde de résonance $\lambda_r$ de la cavité résonante 26.

Le dispositif 1 comporte également une source de lumière 10, en particulier une diode laser, agencée pour émettre une onde lumineuse incidente 12 vers l'entrée $20_i$ du guide d'onde 20. L'onde lumineuse 12 est émise dans une bande spectrale d'émission $\Delta\lambda_{12}$, centrée sur une longueur d'onde d'émission $\lambda_{12}$. La bande spectrale d'émission $\Delta\lambda_{12}$ est incluse dans la bande spectrale de réflexion $\Delta\lambda_{20}$. Elle est de préférence plus fine que la largeur du pic de résonance associé à la longueur d'onde de résonance $\lambda_r$. Le fait que la largeur de la bande spectrale d'émission $\Delta\lambda_{12}$ soit plus fine que la largeur du pic de résonance permet d'ajuster précisément la longueur d'onde d'émission $\lambda_{12}$ par rapport à la longueur d'onde de résonance $\lambda_r$ du guide d'onde. Cet ajustement est effectué par un circuit d'asservissement 41 décrit par la suite.

La largeur de la bande spectrale d'émission $\Delta\lambda_{12}$ est de préférence inférieure à 10 pm ou à 1 pm. Par largeur de la bande spectrale d'émission $\Delta\lambda_{12}$, on entend une largeur à mi-hauteur de la bande spectrale d'émission.

La source de lumière 10 est de préférence un laser continu. Il peut par exemple s'agir d'une diode laser de type DFB (acronyme de Distributed Feedback), de puissance 1 mW, émettant à la longueur d'onde de 1.55 $\mu$m, de largeur spectrale de l'ordre du pm. Ce type de diode laser est d'usage courant dans le domaine des télécommunications.

Le dispositif 1 comporte un photodétecteur 16, de préférence un photodétecteur rapide, de type photodiode. Le photodétecteur présente une bande spectrale de détection $\Delta\lambda_{16}$ qui comprend la bande spectrale de réflexion $\Delta\lambda_{20}$.

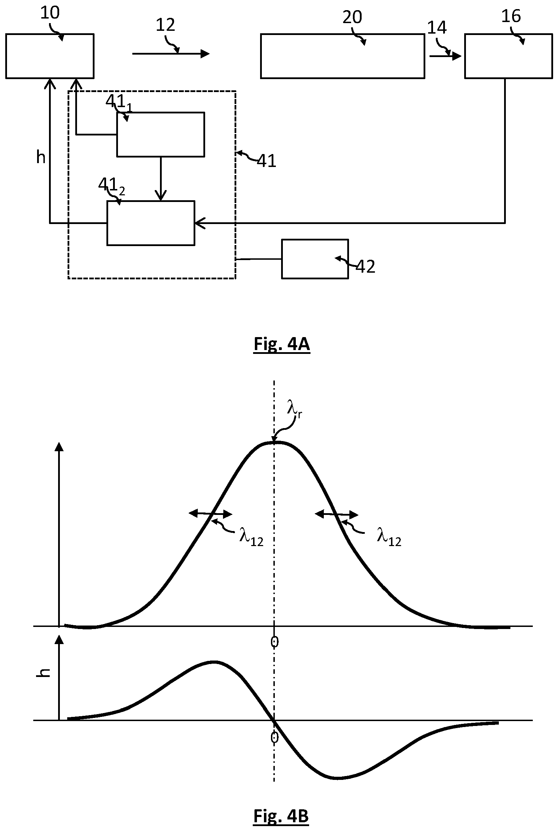

Le dispositif 1 comporte un circuit d'asservissement 41, configuré pour suivre la variation temporelle périodique $\lambda_r(t)$ de la longueur d'onde de résonance $\lambda_r$ de la cavité résonante 26 sous l'effet de la vibration de la membrane. Un tel circuit est décrit par la suite, en lien avec les figures 4A et 4B. Le circuit d'asservissement 41 permet un asservissement de la source de lumière 10, de telle sorte que la longueur d'onde d'émission $\lambda_{12}$ de l'onde lumineuse 12 émise par la source de lumière corresponde à la longueur d'onde de résonnance $\lambda_r$ de la cavité résonnante 26.

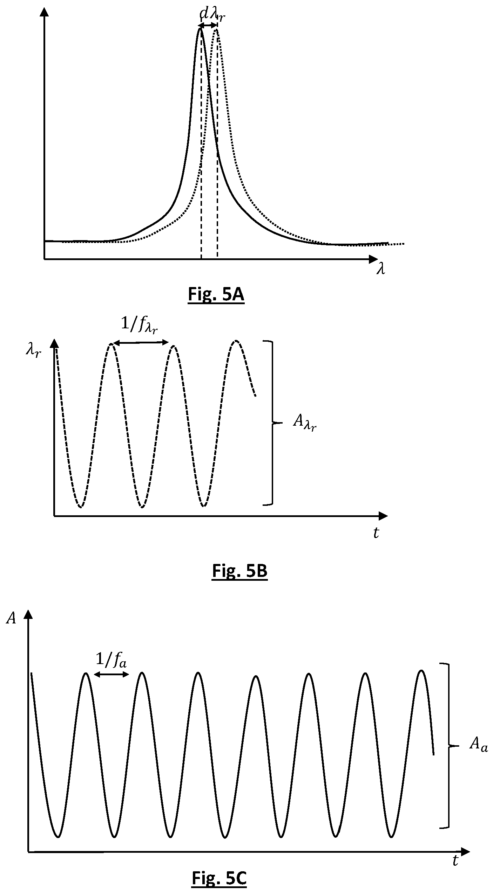

Le dispositif comporte une unité de traitement 42, configurée pour estimer une amplitude de l'onde acoustique 5 sous l'effet de laquelle la membrane 2 vibre. L'amplitude de l'onde acoustique est estimée à partir de la modulation temporelle $\lambda_{12}(t)$ de la longueur d'onde d'émission $\lambda_{12}$ déterminée par le circuit d'asservissement 41. Le fonctionnement de l'unité de traitement 42 est décrit plus en détail en lien avec les figures 5A à 5C.

Le dispositif comporte un capot 8, délimitant un volume arrière, le volume arrière correspondant au volume s'étendant entre la membrane 2 et le capot 8.

D'une façon générale, le guide d'onde 20 comporte une cavité résonante 26, formée à partir d'un premier réflecteur $24_1$ et d'un deuxième réflecteur $24_2$, ces derniers étant obtenus par microstructuration du guide d'onde 20, induisant une variation périodique d'indice de réfraction.

Un point important de l'invention, explicité par la suite, repose sur le fait que :

- lorsque la source de lumière 10 est activée, et émet une onde lumineuse 12 dont la longueur d'onde d'émission $\lambda_{12}$ n'est pas accordée avec la longueur d'onde de résonance Àr du guide d'onde 20 (ou plus précisément de la cavité résonante 26), le guide d'onde 20 réfléchit une onde réfléchie 12' ;
- lorsque la source de lumière 10 est activée, et émet une onde lumineuse 12 dont la longueur d'onde d'émission $\lambda_{12}$ correspond à la longueur d'onde de résonance Àr de la cavité résonante 26, le guide d'onde 20 transmet une onde transmise 14 vers le photodétecteur 16. Plus la longueur d'onde d'émission $\lambda_{12}$ est proche de la longueur d'onde de résonance $\lambda_r$, plus l'intensité de l'onde transmise 14 est importante.

L'invention est basée sur le fait qu'en étant exposée à une onde acoustique 5, d'amplitude acoustique $A_a$, la membrane 2 vibre selon une amplitude de vibration, à la fréquence $f_a$ de l'onde acoustique 5. Il en résulte une déformation périodique du guide d'onde 20, sous l'effet de laquelle la longueur d'onde de résonance $\lambda_r$ suit une modulation temporelle périodique $\lambda_r(t)$. L'amplitude $A_{\lambda r}$ de la modulation temporelle dépend de l'amplitude de vibration de la membrane, cette dernière étant corrélée, par exemple proportionnelle, à l'amplitude acoustique $A_a$. Ainsi, en estimant l'amplitude $A_{\lambda r}$ le dispositif permet d'estimer l'amplitude acoustique $A_a$.

La figure 1C montre une vue de certains éléments décrits en lien avec la figure 1A, dans le plan radial $P_{XY}$. Dans cet exemple, la membrane 2 prend une forme d'un disque de faible épaisseur, l'épaisseur étant le centième du rayon.

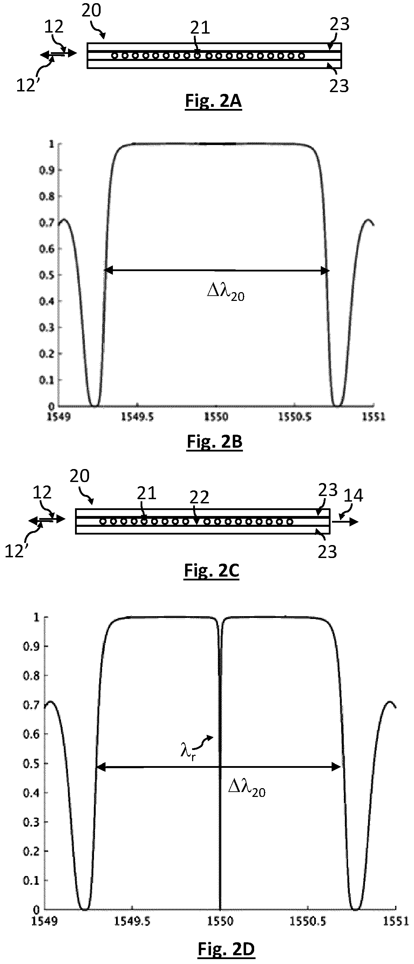

La figure 2A illustre un mode de réalisation selon lequel le guide d'onde 20 est une fibre optique microstructrée, à l'intérieur de laquelle est formé un réseau de Bragg. Ce type de microstructuration, dans une fibre optique, est usuellement désigné par le terme "Fiber Bragg Grating". La fibre optique comporte un premier matériau 21 composant le coeur et un matériau de confinement 23 formant la gaine. Dans le coeur de la fibre optique sont formées des inclusions ou cavités d'un deuxième matériau 22, dont l'indice de réfraction est différent de celui du premier matériau. La figure 2B montre un spectre de réflexion de la fibre optique ainsi microstructurée. Le spectre de réflexion correspond à une intensité réfléchie normalisée par l'intensité d'illumination (axe des ordonnées) en fonction de la longueur d'onde (axe des abscisses - unité nm). La réflexion est maximale dans la bande spectrale de réflexion $\Delta\lambda_{20}$. Ainsi, lorsqu'un tel guide d'onde est illuminé par une onde lumineuse 12, dans la bande spectrale de réflexion $\Delta\lambda_{20}$, il réfléchit une onde lumineuse 12', dans toute la bande spectrale de réflexion $\Delta\lambda_{20}$.

La figure 2C illustre une fibre optique similaire, dans lequel deux miroirs de Bragg $24_1$ et $24_2$ sont séparés par un espace 25 rempli du premier matériau 21, comme décrit en lien avec la figure 1B. Lorsque la longueur de l'espace 25 correspond à $\dfrac{k}{n_{eff}}$ fois une longueur d'onde de résonance, comprise dans la bande spectrale de réflexion, la fibre optique comporte une cavité résonante 26.

La figure 2D montre un spectre de réflexion de la fibre optique ainsi microstructurée. La réflexion est maximale selon la bande spectrale de réflexion $\Delta\lambda_{20}$, à l'exception de la longueur d'onde de résonance $\lambda_r$. Ainsi, lorsqu'un tel guide d'onde est illuminé par une onde lumineuse 12, dans la bande spectrale de réflexion $\Delta\lambda_{20}$, il réfléchit une onde lumineuse 12', si la longueur d'onde $\lambda_{12}$ est différente de la longueur d'onde de résonance, et transmet une onde lumineuse 14, dite onde lumineuse transmise, lorsque la longueur d'onde $\lambda_{12}$ se situe dans

le pic de résonnance.

Les figures 2C et 2D sont issues de modélisations, calculées par un logiciel de calcul de type Matlab (marque déposée - Mathworks), en considérant une structuration s'étendant selon une longueur L de 3 mm, le contraste d'indice entre les premier et deuxième matériaux 21, 22 étant de $10^{-3}$, la période de chaque miroir de Bragg étant de 0,5 $\mu$m environ. Ainsi, chaque miroir de Bragg comporte un nombre de périodes égal à 3000.

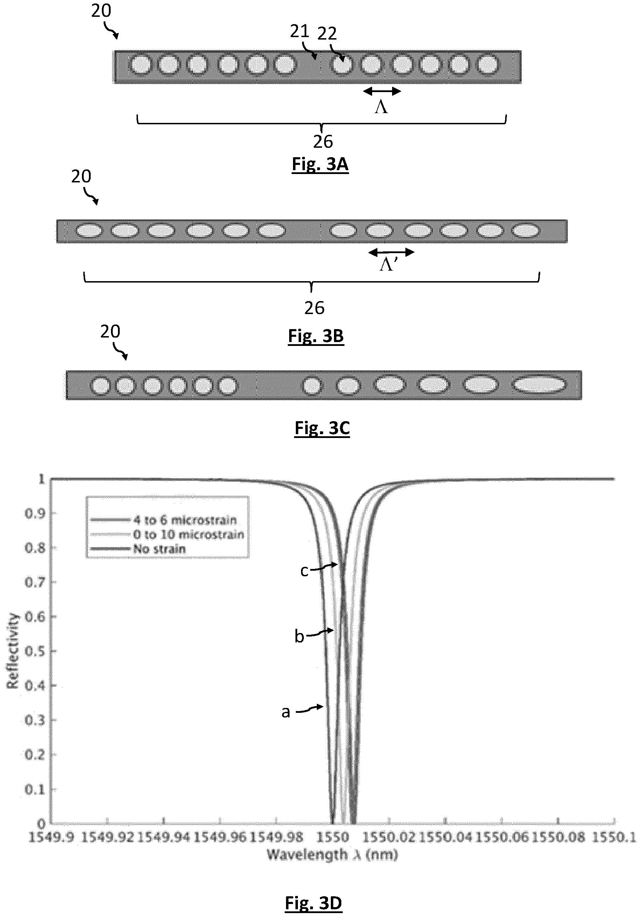

Les figures 3A à 3C illustrent la variation de la longueur d'onde de résonance $\lambda_r$ résultant d'une déformation d'un guide d'onde 20 tel que décrit sur les figures 1B ou 2C. Les figures 3A et 3B montrent le guide d'onde 20 respectivement non déformé et déformé. Sous l'effet de la déformation, la période spatiale de la modulation d'indice varie de A à A' = A + dA. L'application de l'expression (1) résulte en un décalage d$\lambda_B$ de la longueur d'onde de Bragg $\lambda_B$, autour de laquelle s'étend la bande spectrale de réflexion $\Delta\lambda$. Le décalage d$\lambda_B$ est tel que :

$$\frac{1}{\lambda_B} \times \frac{\partial \lambda_B}{\partial \varepsilon} = 0.78 \times 10^{-6} \quad \mu\varepsilon^{-1} \quad (3),$$

où :

- $\varepsilon$ correspond à la déformation, exprimée en $\mu\varepsilon$ (microstrain), correspondant à $10^{-4}$ %.

La déformation $\varepsilon$ est une variation normalisée de la longueur, de telle sorte que:

$$\varepsilon = \frac{d\Lambda}{\Lambda} \times 10^{-2} \quad (4)$$

- $\times$ est l'opérateur multiplication.

L'expression (3) a été obtenue en considérant que lorsque la membrane est constituée de $SiO_2$, et le saut d'indice entre le premier matériau et le deuxième matériau est de $10^{-3}$. Elle se base sur une déformation homogène de chaque miroir de Bragg, comme représenté sur la figure 3B. D'après l'expression (3), pour une déformation de 1 $\mu\varepsilon$, le décalage d$\lambda_B$ de la longueur d'onde de Bragg $\lambda_B$ est de 1.2 pm.

Sur la figure 3C, on a représenté une déformation non uniforme du guide d'onde 20, certaines portions des miroirs de Bragg étant moins déformées que d'autres.

La figure 3D est une modélisation montrant l'évolution du spectre de réflexion d'un miroir de Bragg, dans une configuration telle que décrite en lien avec la figure 3C. Les courbes a, b et c correspondent respectivement à une absence de déformation, à une déformation linéaire comprise entre de 0 à 10 microstrain selon l'axe du guide d'onde, ainsi qu'une déformation linéaire comprise entre 4 à 6 microstrain selon l'axe du guide d'onde. Le décalage spectral est faible, inférieur à 10 pm. Les courbes b et c correspondent à une même déformation moyenne du guide d'onde, égale à 5 microstrain. Le décalage des longueurs d'onde de résonance entre ces deux configurations est dû à la variation de déformation le long de l'axe du guide d'onde, respectivement dans la plage 0-10 microstrain et 4-6 microstrain. Plus la déformation est homogène, plus le décalage spectral de la longueur d'onde de résonance, sous l'effet de la déformation, est important.

De préférence, le guide d'onde 20 s'étend sur les parties de la membrane 2 soumises à une déformation la plus importante. La membrane 2 comporte un ou plusieurs ventres de vibration, au niveau duquel ou desquels l'amplitude de vibration est maximale. Chaque ventre peut être déterminé par modélisation et/ou expérimentalement. De préférence, le guide d'onde 20 s'étend sur au moins un ventre de vibration de la membrane. Cela maximise la déformation du guide d'onde 20, ce qui augmente d'autant plus le décalage spectral résultant de la déformation. On obtient ainsi une meilleure sensibilité.

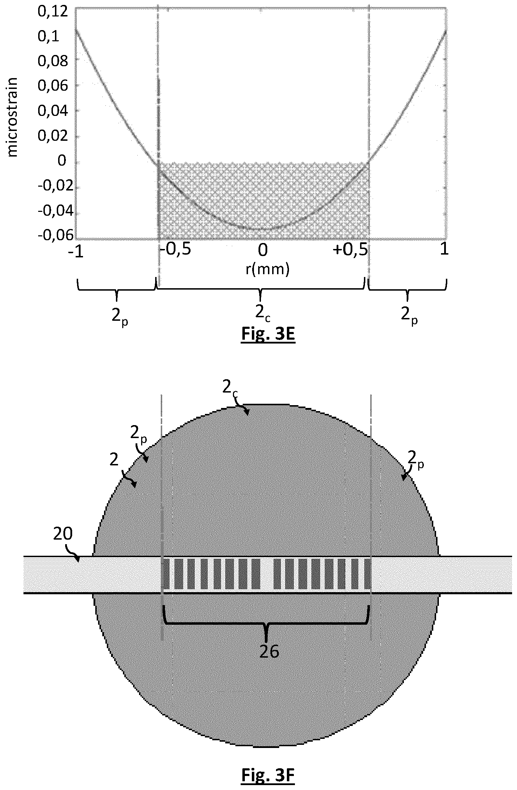

Les inventeurs ont modélisé une déformation d'une membrane 2, telle que schématisée sur les figures 1A et 1C. La membrane modélisée était en $SiO_2$, de rayon 1 mm et d'épaisseur 10 $\mu$m, soumise à une pression de 1 Pa. La déformation de la membrane, le long d'un de ses diamètres, est représentée sur la figure 3E, l'axe des abscisses correspondant à la distance par rapport au centre de la membrane (en mm) et l'axe des ordonnées correspondant à la déformation, en microstrain. La cavité résonante 26 est de préférence disposée au niveau de l'amplitude maximale de déformation, c'est-à-dire au centre de la membrane 20. La simulation illustrée sur la figure 3E montre qu'avec cette membrane, l'application d'une pression de 1 Pa induit une déformation de quelques $10^{-2}$ microstrain.

En outre, afin de disposer d'une déformation la plus homogène possible, il est préférable que la cavité résonante 26 soit disposée dans des parties de la membrane au niveau desquelles sous l'effet de la déformation, la courbure soit la plus homogène possible. Autrement dit, il s'agit de parties de la membrane dans lesquelles la dérivée de la courbure est faible.

Sur la figure 3E, la déformation de la membrane est négative dans la partie centrale $2_c$ et positive dans la partie périphérique $2_p$. La cavité résonante 26 est avantageusement placée sur une portion de la membrane 2 dans laquelle sous l'effet de la vibration de la membrane, la déformation est de même signe, qu'il s'agisse d'une compression ou d'une dilatation.

Sur la figure 3F, on a schématisé un guide d'onde 20 dont la cavité résonante 26 est positionnée sur la partie centrale $2_c$ de la membrane 2, de part et d'autre du centre de la membrane, selon une distance de $\pm 0.5$ mm par rapport au centre. Sous l'effet de la vibration de la membrane, la déformation est alternativement négative ($\varepsilon < 0$), comme représenté sur la figure 3E, puis positive. Lorsque la déformation est négative, la cavité optique est comprimée : les portions du deuxième matériau 22 se rapprochent les unes des autres. Lorsque la déformation est positive, la cavité optique est dilatée : les portions du deuxième matériau 22 s'éloignent les unes des autres.

Les figures 4A et 4B schématisent le fonctionnement du circuit d'asservissement 41, dont la fonction est d'asservir la longueur d'onde d'émission $\lambda_{12}$ à la longueur d'onde de résonance $\lambda_r$ de la cavité résonante 26 formée dans le guide d'onde 20. Le circuit d'asservissement 41 effectue un verrouillage de la longueur d'onde $\lambda_{12}$ par rapport à la longueur d'onde de résonance $\lambda_r$. Le verrouillage en longueur d'onde est usuellement désigné par le terme anglosaxon "top of fringe locking". Il s'agit par exemple d'un circuit de type Pound-Drever-Hall, un tel circuit étant décrit dans la publication Chow J.H."Phase-sensitive interrogation of fiber Bragg grating resonators for sensing applications", J. Light. Technol., vol. 23, n°5, p. 1881-1889, May 2005, ou encore dans la publication Black E. "An introduction to Pound-Drever-Hall laser frequency stabilization", Am. J. Phys. 69 (1), January 2001.

Le circuit d'asservissement 41 comporte un modulateur $41_1$, pour moduler la longueur d'onde $\lambda_{12}$ de l'onde lumineuse 12 émise par la source de lumière 10, selon une fréquence de modulation élevée, pouvant varier de 10 kHz à plusieurs centaines de MHz. La fréquence de modulation de la longueur d'onde d'émission $\lambda_{12}$ est largement supérieure à la fréquence acoustique maximale adressée par le dispositif. Elle peut par exemple être supérieure au moins 10 fois la fréquence acoustique maximale adressée par le dispositif. L'intensité de l'onde lumineuse 14, transmise par le guide d'onde 20 et détectée par le photodétecteur 16, est transmise au circuit 41, ce dernier mesurant une fonction h traduisant une variation l'intensité détectée par le photodétecteur 16 par rapport à la modulation en longueur d'onde.

En fonction du signe de la fonction *h*, un signal d'erreur est adressé à la source de lumière, de façon à augmenter ou diminuer la longueur d'onde d'émission $\lambda_{12}$. Par exemple, lorsque l'évolution de l'intensité détectée par rapport à une augmentation de la longueur d'onde est négative, la longueur d'onde d'émission est progressivement diminuée. Lorsque l'évolution de l'intensité détectée par rapport à une augmentation en longueur d'onde est positive, la longueur d'onde d'émission est augmentée. Lorsque l'évolution de l'intensité détectée par rapport à la modulation est proche de zéro, la longueur d'onde d'émission correspond à la longueur d'onde de résonance du guide d'onde. Le circuit d'asservissement 41 utilise le fait que :

- lorsque $\lambda_{12} < \lambda_r$, une augmentation de la longueur d'onde d'émission $\lambda_{12}$ résulte en une augmentation de l'intensité de l'onde transmise 14. Inversement, une diminution de la longueur d'onde $\lambda_{12}$ résulte en une diminution de l'intensité de l'onde transmise 14 ;
- lorsque $\lambda_{12} > \lambda_r$, une augmentation de la longueur d'onde d'émission $\lambda_{12}$ résulte en une diminution de l'intensité de l'onde transmise 14. Inversement, une diminution de la longueur d'onde $\lambda_{12}$ résulte en une augmentation de l'intensité de l'onde transmise 14.

Ainsi, en effectuant une faible modulation de la longueur d'onde $\lambda_{12}$ de l'onde lumineuse d'émission 12, et en observant l'effet de la modulation sur l'intensité de l'onde lumineuse transmise 14, la source de lumière 10 peut être asservie, de façon que la longueur d'onde d'émission $\lambda_{12}$ suive la longueur d'onde de résonance $\lambda_r$ du guide d'onde 20.

Le suivi de la longueur d'onde de résonnance par verrouillage de la longueur d'onde permet d'obtenir un suivi de la longueur d'onde de résonance avec une sensibilité en longueur d'onde de l'ordre de $10^{-6}$ pm lorsque la fréquence acoustique de l'onde acoustique 5 est supérieure à 10 kHz, ou de de l'ordre de $10^{-3}$ pm lorsque la fréquence acoustique est inférieure à 1 kHz. Compte tenu de l'expression (3), il est estimé que cela permet une estimation de la déformation de la membrane de l'ordre de quelques picostrain, soit l'équivalent de quelques mPa en se basant sur une membrane formée de $SiO_2$. La méthode de Pound-Drever-Hall est donc adaptée, compte tenu des faibles décalages spectraux de la cavité résonante 26, ces derniers pouvant être de l'ordre de quelques pm.

Le suivi de la longueur d'onde de résonance par verrouillage de la longueur d'onde permet également d'être insensible à des fluctuations de longueur d'onde de résonance de la cavité 26 sous l'effet de la variation de paramètres environnementaux, de type variation de température ou d'humidité.

Les figures 5A à 5C illustrent le lien entre la variation temporelle périodique $\lambda_{12}(t)$ de la longueur d'onde d'émission $\lambda_{12}$, lorsque la membrane 2 vibre sous l'effet d'une onde acoustique 5, et l'amplitude de l'onde acoustique. Du fait de l'asservissement effectué par le circuit d'asservissement 41, la variation temporelle périodique de la longueur d'onde d'émission $\lambda_{12}(t)$ est considérée comme correspondant à la modulation temporelle de la longueur d'onde de résonance $\lambda_r(t)$ induite par la vibration de la membrane. Sur la figure 5A, on a schématisé un spectre de l'onde lumineuse transmise 14, et un décalage spectral $d\lambda_r$ sous l'effet de la déformation du guide d'onde 20. La figure 5B montre la modulation temporelle de la longueur d'onde de résonance $\lambda_r$ résultant de la déformation du guide d'onde 20, la modulation étant périodique et de fréquence $f_{\lambda r}$ correspondant à la fréquence acoustique $f_a$. Le circuit d'asservissement 41, en asservissant la longueur d'onde d'émission $\lambda_{12}$ à la longueur d'onde de résonance $\lambda_r$, permet de déterminer une telle modulation. L'unité de traitement 42 est configurée pour analyser la variation périodique de la longueur d'onde d'émission et pour estimer l'amplitude $A_{\lambda r}$ de modulation de la longueur d'onde de résonance (ou de la longueur d'onde d'émission) à la fréquence $f_a$. A partir de l'amplitude $A_{\lambda r}$, l'unité de traitement 42 estime l'amplitude $A_a$ de l'onde acoustique 5.

L'estimation de l'amplitude acoustique $A_a$ à partir de l'amplitude $A_{\lambda r}$ de modulation de la longueur d'onde de résonance peut être déterminée par simulation et/ou par une calibration expérimentale.

On observe que la détermination de la l'amplitude acoustique $A_a$ ne suppose pas forcément une détermination de la valeur de la longueur d'onde de résonance, mais une détermination précise de l'amplitude de modulation $A_{\lambda r}$

La figure 6 correspond à une adaptation d'une plage fréquentielle de fonctionnement du dispositif 1. La figure 6 correspond à l'amplitude de déformation de la membrane (axe des ordonnées - unité dBV/Pa) en fonction de la fréquence acoustique (axe des abscisses - unité Hz). La plage fréquentielle de fonctionnement du dispositif correspond à la partie la plus plate de la courbe. La plage fréquentielle de fonctionnement s'étend entre une fréquence de coupure basse $f_{low}$ et une fréquence de résonance mécanique $f_{res}$. Dans cet exemple, la plage fréquentielle a été adaptée de manière à couvrir les ondes acoustiques audibles, entre 100 Hz et 20 KHz.

La fréquence de coupure basse est telle que :

$$f_{low} = \frac{1}{2\pi R_6 C_8} \quad (6)$$

où

$R_6$ quantifie les pertes visqueuses dues aux ouvertures 6 pratiquées dans la membrane 2;
$C_8$ correspond à une compressibilité du volume arrière du dispositif, défini en lien avec la figure 1A.

On peut montrer que :

$$R_6 = N \times 8\pi\eta \frac{e}{s_6{}^2} \quad (7)$$

où :

- N correspond au nombre d'ouvertures 6 pratiquées dans la membrane ;
- $\eta$ est la viscosité de l'air, en Pa.s;
- e est l'épaisseur de la membrane;
- $s_6$ est la section des ouvertures 6, la section s'étendant parallèlement au plan radial $P_{XY}$.

D'autre part :

$$C_8 = \frac{V_8}{c_0{}^2\rho_0} \quad (9)$$

où

- $V_8$ est le volume du volume arrière, en cm³

- $c_0$ est la vitesse du son dans l'air, en m.s⁻¹ ;
- $\rho_0$ est la masse volumique de l'air, en g.cm⁻³.

La fréquence de résonance de la membrane peut être calculée selon l'expression :

$$f_{res} = \frac{10.22}{2\pi} \frac{e}{r^2} \sqrt{\frac{E}{12\rho(1 - v^2)}} \quad (10)$$

Où :

- r est le rayon de la membrane 2, exprimé en cm ;
- E est le module d'Young du matériau formant la membrane ;
- $\rho$ est le la densité du matériau formant la membrane (g.cm⁻³);
- v est le coefficient de poisson du matériau formant la membrane.

On peut ainsi adapter la plage fréquentielle de fonctionnement en fonction des paramètres définis ci-dessus, de façon à couvrir tout ou partie du domaine audible ou des ultrasons. Plus l'épaisseur de la membrane est élevée et plus le diamètre est faible, plus la fréquence de résonance $f_{res}$ augmente. Inversement, plus la membrane est fine et plus le diamètre est élevé, plus la fréquence de résonance $f_{res}$ diminue.

Les figures 7A à 7D illustrent les principales étapes permettant de former un guide d'onde 20, non fibré, sur une membrane 2.

On dispose d'un substrat 3, par exemple en Si, sur lequel on a déposé une première couche $3_1$, par exemple en SiO₂ (indice 1.44), d'épaisseur 4 μm, et une deuxième couche $3_2$, par exemple en SiON (oxynitrure de silicium - indice 1.60), d'épaisseur 1 μm. Cf. figure 7A.

Le procédé comporte :

- une gravure de la deuxième couche $3_2$, par photolithographie, de façon à former le guide d'onde 20. Cf. figure 7B. Dans cet exemple, SiON correspond au premier matériau 21 du guide d'onde.
- une gravure en face arrière du substrat 3, de façon à libérer une partie de la première couche $3_1$, cette dernière formant la membrane 2 suspendue. Cf. figure 7C.

une insolation par impulsions laser femtoseconde, de façon à former des cavités d'un deuxième matériau 22. Cf. figure 7D. Sous l'effet de l'insolation au laser, le SiON subit une variation locale d'indice. Le SiON insolé correspond alors à un deuxième matériau 22, dont l'indice de réfraction $n_2$ est différent de celui du SiON non insolé. En effet, l'insolation génère des microbulles, ce qui induit une variation de l'indice de réfraction. L'insolation est effectuée de façon à obtenir une répartition régulière et périodique des cavités 22. Il en résulte une modulation de l'indice de réfraction de guide d'onde 20, selon l'axe de propagation de la lumière, à l'intérieur du guide d'onde. La durée de chaque impulsion est par exemple égale à 100 fs, à la longueur d'onde de 800 nm, l'énergie de chaque impulsion étant de 30 nJ. La fréquence d'impulsion peut être comprise entre quelques Hz et 200 kHz.

Une autre technique d'insolation est la photoinscription UV, décrite dans la publication Chow J.H."Phase-sensitive interrogation of fiberBragg grating resonators for sensing applications", J. Light. Technol., vol. 23, n°5, p. 1881-1889, May 2005. La photoinscription UV permet par exemple la microstructuration de fibres optiques

Lors de l'insolation, la modulation de l'indice de réfraction est relativement faible, de l'ordre de $10^{-3}$. Cependant, l'inscription par laser femtoseconde permet la réalisation de miroirs de Bragg s'étendant selon des longueurs courtes, de l'ordre du mm. Ce type d'insolation permet d'obtenir une cavité résonante 26 de grande finesse, la largeur du pic de résonance étant inférieure à quelques dizaines de pm, voire inférieure à 10 pm, et pouvant être de l'ordre ou inférieure à 5 pm.

Il est possible d'augmenter la longueur selon laquelle s'étend chaque miroir de Bragg. Il en résulte une finesse du pic de résonance encore accrue.

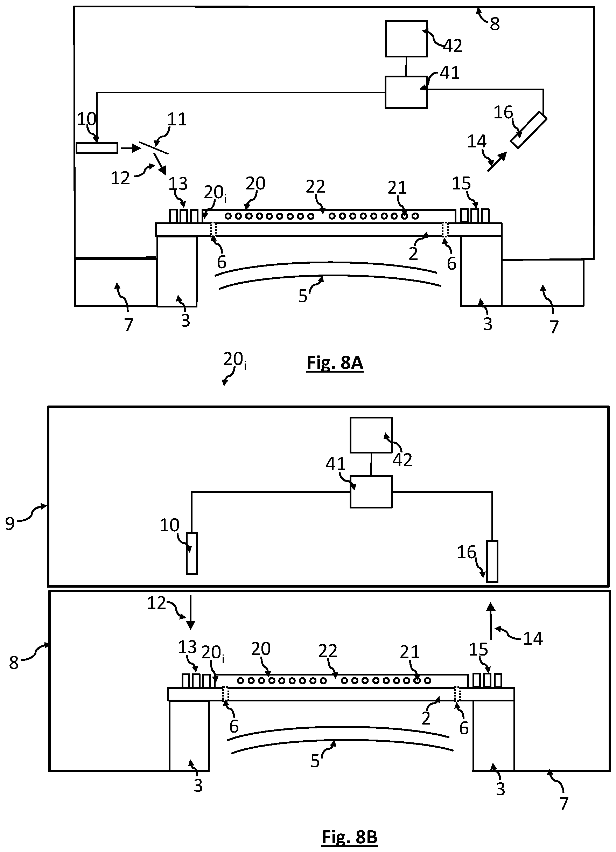

On a représenté, sur les figures 8A et 8B, des exemples de dispositif. Sur la figure 8A, le dispositif 1 est disposé sur un support 7 fermé par un capot 8. La source laser 10 émet une onde lumineuse 12 parallèlement au plan radial $P_{XY}$, l'onde lumineuse étant réfléchie par un réflecteur 11 en direction de la membrane 2. Un réseau de couplage d'entrée 13 permet un couplage de l'onde lumineuse 12, et l'entrée $20_i$ du guide d'onde 20. Un réseau de couplage de sortie 15 permet de renvoyer tout ou partie de l'onde lumineuse transmise 14 vers le photodétecteur 16.

Sur la figure 8B, on a représenté un dispositif dans lequel les composants optiques actifs (source de lumière 10, photodétecteur 16, ainsi que le circuit d'asservissement 41 et l'unité de traitement 42 sont déportés dans un composant annexe 9, rapporté sur le capot 8. Les éléments sensibles à la déformation, c'est-à-dire le guide d'onde 20 et la membrane 2 sont confinés à dans un boîtier, formé d'un support 7 fermé par le capot. Le capot 8 comporte des parties transparentes, de façon à permettre une transmission de l'onde lumineuse émise 12 et de l'onde lumineuse transmise 14.

L'invention pourra être mise en oeuvre pour constituer des dispositifs de détection compacts, les principales applications visées étant la détection d'ondes acoustiques dans le domaine audible et ultrasonore.

## Revendications

1. Dispositif de détection (1) d'une onde acoustique (5) comportant :

- une membrane (2), supportant un guide d'onde (20), la membrane étant configurée pour vibrer selon une fréquence ($f_a$) de l'onde acoustique, le guide d'onde s'étendant entre une entrée et une sortie ;
- le guide d'onde comportant un premier réflecteur ($24_1$), et un deuxième réflecteur ($24_2$), chaque réflecteur réfléchissant la lumière dans une bande spectrale de réflexion ($\Delta\lambda_{20}$), le guide d'onde étant configuré pour vibrer avec la membrane;
- le premier réflecteur et le deuxième réflecteur étant espacés l'un de l'autre, pour former une cavité optique résonante (26), la cavité optique résonante définissant une longueur d'onde de résonance ($\lambda_r$), dans la bande spectrale de réflexion ($\Delta\lambda_{20}$);
- de telle sorte que le guide d'onde :

  • transmet la lumière à la longueur d'onde de résonance ($\lambda_r$);
  • réfléchit la lumière, dans la bande spectrale de réflexion, en dehors de la longueur d'onde de résonnance ($\Delta\lambda_{20}$);

le dispositif comportant également:
- une source de lumière laser (10), configurée pour émettre une onde lumineuse (12) vers l'entrée du guide d'onde, selon une longueur d'onde d'émission ($\lambda_{12}$), dans le guide d'onde (20);
- un photodétecteur (16), agencé pour détecter une onde lumineuse transmise (14) par le guide d'onde à la longueur d'onde de résonance ($\lambda_r$);
- un circuit d'asservissement (41), relié à la source de lumière (10) et au photodétecteur (16), et configuré pour asservir la longueur d'onde de l'onde d'émission ($\lambda_{12}$) à la longueur d'onde de résonance ($\lambda_r$) de la cavité optique résonante (26) en différents instants ;
- une unité de traitement (42), reliée au circuit d'asservissement, et configurée pour:

  • déterminer une variation temporelle périodique de la longueur d'onde d'émission ($\lambda_{12}$) sous l'effet d'une vibration de la membrane, la variation temporelle périodique de la longueur d'onde d'émission correspondant à une variation périodique de la longueur d'onde de résonance ;
  • estimer une amplitude de l'onde acoustique à partir de la variation temporelle périodique de la longueur d'onde d'émission ;

le dispositif étant **caractérisé en ce que** :

- le guide d'onde (20) est formé directement sur la membrane (2) ;
- le guide d'onde, le premier réflecteur et le deuxième réflecteur étant configurés pour se déformer sous l'effet de la vibration de la membrane ;
- la membrane présente, sous l'effet de la vibration, au moins un ventre de vibration, l'amplitude de vibration étant maximale au niveau de chaque ventre de vibration ;
- le guide d'onde (20) s'étend au niveau d'au moins un ventre de vibration.

2. Dispositif selon la revendication 1 dans lequel chaque réflecteur ($24_1$, $24_2$) est un miroir de Bragg, formé par une modulation périodique d'un indice de réfraction ($n_1$, $n_2$) le long du guide d'onde.

3. Dispositif selon l'une quelconque des revendications précédentes, dans lequel le circuit d'asservissement (41) comporte une boucle d'asservissement, reliée à la source de lumière (10), et configurée pour asservir la longueur d'onde d'émission ($\lambda_{12}$) de l'onde lumineuse émise par la source de lumière sur la longueur d'onde de résonance ($\lambda_r$) de la cavité optique résonante.

4. Dispositif selon la revendication 3, dans lequel le circuit d'asservissement (41) met en oeuvre un asservissement de type verrouillage en longueur d'onde.

5. Dispositif selon l'une quelconque des revendications précédentes, dans lequel la source de lumière laser émet l'onde lumineuse dans une bande spectrale d'émission ($\Delta\lambda_{12}$) de largeur inférieure à 10 pm.

6. Dispositif selon l'une quelconque des revendications précédentes, dans lequel :

- le premier réflecteur ($24_1$) est un premier miroir de Bragg ;
- le deuxième réflecteur ($24_2$) est un deuxième miroir de Bragg ;
- le premier miroir de Bragg et le deuxième miroir de Bragg forment un même miroir de Bragg comportant un défaut (25), le premier miroir de Bragg et le deuxième miroir de Bragg correspondant aux parties du miroir de Bragg s'étendant respectivement de part et d'autre du défaut.

7. Procédé de détection d'une amplitude ($A_a$) d'une onde acoustique (5) à l'aide d'un dispositif (1) selon l'une quelconque des revendications précédentes, comportant :

a) vibration de la membrane (2), sous l'effet de l'onde acoustique, la membrane vibrant selon une fréquence de vibration correspondant à une fréquence ($f_a$) de l'onde acoustique, la vibration de la membrane entraînant une vibration du guide d'onde (20), sous l'effet de laquelle la longueur d'onde de résonance du guide d'onde ($\lambda_r$) est modulée périodiquement ;
b) activation de la source de lumière laser (10), de telle sorte que la source de lumière émet une onde lumineuse, à une longueur d'onde d'émission ($\lambda_{12}$), dans le guide d'onde ;
c) à l'aide du circuit d'asservissement (41), asservissement de la longueur d'onde d'émission ($\lambda_{12}$) à la longueur d'onde de résonance ($\lambda_r$), de telle sorte que la longueur d'onde d'émission varie périodiquement, la variation temporelle de la longueur d'onde d'émission ($\lambda_{12}(t)$) correspondant à la modulation périodique de la longueur d'onde de résonance ($\lambda_r(t)$), à la fréquence ($f_a$) de l'onde acoustique;
d) à partir de la variation temporelle de la longueur d'onde d'émission, effectuée par le circuit d'asservissement (41), estimation, par l'unité de traitement (42), d'une amplitude de l'onde acoustique.

8. Procédé de réalisation d'un dispositif selon l'une quelconque des revendications 1 à 6, comportant :

- dépôt d'une couche mince d'un premier matériau sur une membrane, de façon à former un guide d'onde ;
- inscription du guide d'onde par un faisceau laser femtoseconde, de façon à obtenir une modulation périodique d'un indice de réfraction du guide d'onde.

**Patentansprüche**

1. Vorrichtung (1) zur Erfassung einer Schallwelle (5), umfassend:

- eine Membran (2), die einen Wellenleiter (20) trägt, wobei die Membran dazu ausgestaltet ist, gemäß einer Frequenz ($f_a$) der Schallwelle zu schwingen, wobei sich der Wellenleiter zwischen einem Eingang und einem Ausgang erstreckt;
- wobei der Wellenleiter einen ersten Reflektor ($24_1$) und einen zweiten Reflektor ($24_2$) umfasst, wobei jeder Reflektor das Licht in einem Reflexionsspektralband ($\Delta\lambda_{20}$) reflektiert, wobei der Wellenleiter dazu ausgestaltet ist, mit der Membran zu schwingen;
- wobei der erste Reflektor und der zweite Reflektor voneinander beabstandet sind, um einen optischen Hohlraumresonator (26) zu bilden, wobei der optische Hohlraumresonator eine Resonanzwellenlänge ($\lambda_r$) in dem Reflexionsspektralband ($\Delta\lambda_{20}$) definiert;
- so dass der Wellenleiter:

    • das Licht mit der Resonanzwellenlänge ($\lambda_r$) überträgt;
    • das Licht in dem Reflexionsspektralband, außerhalb der Resonanzwellenlänge ($\Delta\lambda_{20}$), reflektiert;

wobei die Vorrichtung ferner umfasst:

- eine Laserlichtquelle (10), die dazu ausgestaltet ist, eine Lichtwelle (12) zu dem Eingang des Wellenleiters hin gemäß einer Emissionswellenlänge ($\lambda_{12}$) in den Wellenleiter (20) zu emittieren;
- einen Fotodetektor (16), der dazu eingerichtet ist, eine von dem Wellenleiter übertragene Lichtwelle (14) mit der Resonanzwellenlänge ($\lambda_r$) zu erfassen;
- eine Nachführschaltung (41), die mit der Lichtquelle (10) und mit dem Fotodetektor (16) verbunden ist und dazu ausgestaltet ist, die Wellenlänge der Emissionswelle ($\lambda_{12}$) entsprechend der Resonanzwellenlänge ($\lambda_r$) des optischen Hohlraumresonators (26) zu verschiedenen Zeitpunkten nachzuführen;
- eine Verarbeitungseinheit (42), die mit der Nachführschaltung verbunden ist und dazu ausgestaltet ist:

    • eine periodische zeitliche Änderung der Emissionswellenlänge ($\lambda_{12}$) unter der Wirkung einer Schwingung der Membran zu bestimmen, wobei die periodische zeitliche Änderung der Emissionswellenlänge einer periodischen Änderung der Resonanzwellenlänge entspricht;
    • eine Amplitude der Schallwelle ausgehend von der periodischen zeitlichen Änderung der Emissionswellenlänge zu schätzen;

wobei die Vorrichtung **dadurch gekennzeichnet ist, dass**:

- der Wellenleiter (20) direkt auf der Membran (2) gebildet ist;
- der Wellenleiter, der erste Reflektor und der zweite Reflektor dazu ausgestaltet sind, sich unter der Wirkung der Schwingung der Membran zu verformen;
- die Membran, unter der Wirkung der Schwingung, mindestens einen Schwingungsbauch aufweist, wobei die Schwingungsamplitude an jedem Schwingungsbauch am größten ist;

- der Wellenleiter (20) sich an mindestens einem Schwingungsbauch erstreckt.

2. Vorrichtung nach Anspruch 1, wobei jeder Reflektor ($24_1$, $24_2$) ein Bragg-Spiegel ist, der durch eine periodische Modulation eines Brechungsindex ($n_1$, $n_2$) entlang des Wellenleiters gebildet wird.

3. Vorrichtung nach einem der vorhergehenden Ansprüche, wobei die Nachführschaltung (41) eine Nachführschleife umfasst, die mit der Lichtquelle (10) verbunden ist und dazu ausgestaltet ist, die Emissionswellenlänge ($\lambda_{12}$) der von der Lichtquelle emittierte Lichtwelle entsprechend der Resonanzwellenlänge ($\lambda_r$) des optischen Hohlraumresonators nachzuführen.

4. Vorrichtung nach Anspruch 3, wobei die Nachführschaltung (41) eine Nachführung vom Typ Wellenlängensperre einsetzt.

5. Vorrichtung nach einem der vorhergehenden Ansprüche, wobei die Laserlichtquelle die Lichtwelle in einem Emissionsspektralband ($\Delta\lambda_{12}$) mit einer Breite von weniger als 10 pm emittiert.

6. Vorrichtung nach einem der vorhergehenden Ansprüche, wobei:

    - der erste Reflektor ($24_1$) ein erster Bragg-Spiegel ist;
    - der zweite Reflektor ($24_2$) ein zweiter Bragg-Spiegel ist;
    - der erste Bragg-Spiegel und der zweite Bragg-Spiegel einen selben Bragg-Spiegel bilden, der einen Fehler (25) umfasst, wobei der erste Bragg-Spiegel und der zweite Bragg-Spiegel den Teilen des Bragg-Spiegels entsprechen, die sich zu beiden Seiten des Fehlers erstrecken.

7. Verfahren zur Erfassung einer Amplitude ($A_a$) einer Schallwelle (5) mithilfe einer Vorrichtung (1) nach einem der vorhergehenden Ansprüche, umfassend:

    a) Schwingen der Membran (2) unter der Wirkung der Schallwelle, wobei die Membran gemäß einer Schwingungsfrequenz schwingt, die einer Frequenz ($f_a$) der Schallwelle entspricht, wobei die Schwingung der Membran zu einer Schwingung des Wellenleiters (20) führt, unter deren Wirkung die Resonanzwellenlänge des Wellenleiters ($\lambda_r$) periodisch moduliert wird;
    b) Aktivieren der Laserlichtquelle (10), so dass die Lichtquelle eine Lichtwelle mit einer Emissionswellenlänge ($\lambda_{12}$) in den Wellenleiter emittiert;
    c) mithilfe der Nachführschaltung (41) Nachführen der Emissionswellenlänge ($\lambda_{12}$) entspre-

chend der Resonanzwellenlänge ($\lambda_r$), so dass sich die Emissionswellenlänge periodisch ändert, wobei die zeitliche Änderung der Emissionswellenlänge ($\lambda_{12}(t)$) der periodischen Modulation der Resonanzwellenlänge ($\lambda_r(t)$) entspricht, mit der Frequenz ($f_a$) der Schallwelle;

d) ausgehend von der zeitlichen Änderung der Emissionswellenlänge, die von der Nachführschaltung (41) durchgeführt wird, Schätzen, durch die Verarbeitungseinheit (42), einer Amplitude der Schallwelle.

8. Verfahren zur Herstellung einer Vorrichtung nach einem der Ansprüche 1 bis 6, umfassend:

- Abscheiden einer dünnen Schicht eines ersten Materials auf eine Membran, so dass ein Wellenleiter gebildet wird;
- Schreiben des Wellenleiters mit einem Femtosekundenlaserstrahl, so dass eine periodische Modulation eines Brechungsindex des Wellenleiters erhalten wird.

**Claims**

1. Device (1) for detecting an acoustic wave (5), comprising:

- a membrane (2), carrying a waveguide (20), the membrane being configured to vibrate at a frequency ($f_a$) of the acoustic wave, the waveguide extending between an entrance and an exit;
- the waveguide comprising a first reflector ($24_1$), and a second reflector ($24_2$), each reflector reflecting light in a reflection spectral band ($\Delta\lambda_{20}$), the waveguide being configured to vibrate with the membrane;
- the first reflector and the second reflector being spaced apart from each other, so as to form a resonant optical cavity (26), the resonant optical cavity defining a resonant wavelength ($\lambda_r$), in the reflection spectral band ($\Delta\lambda_{20}$);
- such that the waveguide:

  • transmits light at the resonant wavelength ($\lambda_r$);
  • reflects light, in the reflection spectral band, not of the resonant wavelength ($\Delta\lambda_{20}$); the device also comprising:

    - a laser light source (10), configured to emit a light wave (12) toward the entrance of the waveguide, at an emission wavelength ($\lambda_{12}$), into the waveguide (20);
    - a photodetector (16), arranged to detect a light wave (14) transmitted by the waveguide at the resonant wavelength ($\lambda_r$);

- a servo circuit (41), connected to the light source (10) and to the photodetector (16), and configured to servo-control the wavelength ($\lambda_{12}$) of the emission wave to the resonant wavelength ($\lambda_r$) of the resonant optical cavity (26) at various times;
- a processing unit (42), connected to the servo circuit, and configured to:

  • determine a periodic time-dependent variation in the emission wavelength ($\lambda_{12}$) under the effect of a vibration of the membrane, the periodic time-dependent variation in the emission wavelength corresponding to a periodic variation in the resonant wavelength;
  • estimate an amplitude of the acoustic wave on the basis of the periodic time-dependent variation in the emission wavelength;

the device being **characterized in that**:

- the waveguide (20) is formed directly on the membrane (2);
- the waveguide, first reflector and second reflector are configured to deform under the effect of the vibration of the membrane;
- the membrane exhibits, under the effect of the vibration, at least one vibration antinode, the amplitude of vibration being maximum at each vibration antinode;
- the waveguide (20) lies level with at least one vibration antinode.

2. Device according to Claim 1, wherein each reflector ($24_1$, $24_2$) is a Bragg mirror, formed by a periodic modulation of a refractive index ($n_1$, $n_2$) along the waveguide.

3. Device according to any one of the preceding claims, wherein the servo circuit (41) comprises a servo loop, connected to the light source (10), and configured to servo-control the emission wavelength ($\lambda_{12}$) of the light wave emitted by the light source to the resonant wavelength ($\lambda_r$) of the resonant optical cavity.

4. Device according to Claim 3, wherein the servo circuit (41) implements a top-of-fringe locking servo technique.

5. Device according to any one of the preceding claims, wherein the laser light source emits the light wave in an emission spectral band ($\Delta\lambda_{12}$) of width smaller than 10 pm.

6. Device according to any one of the preceding claims, wherein:

   - the first reflector ($24_1$) is a first Bragg mirror;
   - the second reflector ($24_2$) is a second Bragg mirror;
   - the first Bragg mirror and the second Bragg mirror form the same Bragg mirror, the latter comprising a defect (25), the first Bragg mirror and the second Bragg mirror corresponding to the portions of the Bragg mirror lying on either side of the defect, respectively.

7. Method for detecting an amplitude ($A_a$) of an acoustic wave (5) using a device (1) according to any one of the preceding claims, comprising:

   a) vibration of the membrane (2), under the effect of the acoustic wave, the membrane vibrating at a vibration frequency corresponding to a frequency ($f_a$) of the acoustic wave, the vibration of the membrane causing a vibration of the waveguide (20), under the effect of which vibration the resonant wavelength of the waveguide ($\lambda_r$) is periodically modulated;
   b) activating the laser light source (10), such that the light source emits a light wave, at an emission wavelength ($\lambda_{12}$), into the waveguide;
   c) using the servo circuit (41), servo-controlling the emission wavelength ($\lambda_{12}$) to the resonant wavelength ($\lambda_r$), such that the emission wavelength varies periodically, the time-dependent variation in the emission wavelength ($\lambda_{12}(t)$) corresponding to the periodic modulation of the resonant wavelength ($\lambda_r(t)$), at the frequency ($f_a$) of the acoustic wave;
   d) on the basis of the time-dependent variation in the emission wavelength, which variation is obtained via the servo circuit (41), estimating, by means of the processing unit (42), an amplitude of the acoustic wave.

8. Method for manufacturing a device according to any one of Claims 1 to 6, comprising:

   - depositing a thin layer of a first material on a membrane, so as to form a waveguide;
   - inscribing the waveguide with a femtosecond laser beam, so as to obtain a periodic modulation of a refractive index of the waveguide.

**Fig. 1A**

**Fig. 1B**

**Fig. 1C**

**Fig. 2A**

**Fig. 2B**

**Fig. 2C**

**Fig. 2D**

**Fig. 3A**

**Fig. 3B**

**Fig. 3C**

**Fig. 3D**

**Fig. 3E**

**Fig. 3F**

**Fig. 4A**

**Fig. 4B**

**Fig. 5A**

**Fig. 5B**

**Fig. 5C**

**Fig. 6**

**Fig. 7A**

**Fig. 7B**

**Fig. 7C**

**Fig. 7D**

**Fig. 8A**

**Fig. 8B**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2014195372 A

- EP 2856098 A2

**Littérature non-brevet citée dans la description**

- **GALLEGO D.** High-sensitivity ultrasound interferometric single-mode polymer optical fiber sensors for biomédical applications. *Opt Letter,* Juin 2009, vol. 34 (12), 1807
- **CHEN K.** Fiber-optic Fabry Perot interferometer based high sensitive cantilever microphone. *Sens. Actuators Phys.,* Août 2018, vol. 279, 107-112
- **S. M. LEINDERS.** A sensitive optical micro-machined ultrasound sensor (OMUS) based on a silicon photonic ring resonator on an acoustical membrane. *Sci. Rep.,* Novembre 2015, vol. 5 (1

- **CHOW J.H.** Phase-sensitive interrogation of fiber Bragg grating resonators for sensing applications. *J. Light. Technol.,* Mai 2005, vol. 23 (5), 1881-1889
- **BLACK E.** An introduction to Pound-Drever-Hall laser frequency stabilization. *Am. J. Phys,* Janvier 2001, vol. 69 (1
- **CHOW J.H.** Phase-sensitive interrogation of fiber-Bragg grating resonators for sensing applications. *J. Light. Technol.,* Mai 2005, vol. 23 (5), 1881-1889